# EUROPÄISCHE PATENTANMELDUNG

(11) **EP 4 343 920 A1**
(43) Veröffentlichungstag der Anmeldung: **27.03.2024**
(21) Anmeldenummer: 23197527.7
(22) Anmeldetag: 14.09.2023
(51) Int. Cl.: H01M 10/48, G01R 31/364, H01M 50/209, H01M 50/296, H01M 50/55, H01M 50/569

(54) **BATTERIE, INSBESONDERE AGM-BATTERIE SOWIE SYSTEM BESTEHEND AUS EINER STAPELHILFE UND EINER MEHRZAHL VON AGM-BATTERIEN**

(30) Priorität: 14.09.2022 DE 102022123512
(71) Anmelder: HOPPECKE Batterien GmbH & Co. KG., 59929 Brilon (DE)
(72) Erfinder: Steiger, Cora, Brilon (DE); Bäcker, Jens, Brilon-Wülfte (DE)
(74) Vertreter: Brinkmann & Partner

(57) **Zusammenfassung**

Die Erfindung betrifft eine Batterie, insbesondere AGM-Batterie, mit einem Gehäuse und mehreren im Gehäuse angeordneten Elektrodenplatten, wobei positive Elektrodenplatten einerseits und negative Elektrodenplatten andererseits vorgesehen sind, die einander abwechselnd angeordnet sind, wobei die positiven Elektrodenplatten an einen gemeinsamen ersten Pol (1) und die negativen Elektrodenplatten an einen gemeinsamen zweiten Pol (2) jeweils elektrisch angeschlossen sind, wobei die Pole (1, 2) jeweils durch eine jeweilige von einem Deckel (3) des Gehäuses bereitgestellte Öffnung hindurchgeführt und von außen für eine elektrische Kontaktierung zugänglich sind, wobei ein jeder Pol (1, 2) jeweils zwei elektrisch voneinander getrennte Kontaktstellen (4, 5; 6, 7) für eine jeweilige elektrische Kontaktierung aufweist, wobei je Pol (1, 2) eine Kontaktstelle (4, 6) vorgesehen ist, die für den elektrischen Anschluss einer Messeinrichtung eingerichtet ist.

## Beschreibung

Die Erfindung betrifft eine Batterie, insbesondere eine AGM-Batterie, mit einem Gehäuse und mehreren im Gehäuse angeordneten Elektrodenplatten, wobei positive Elektrodenplatten einerseits und negative Elektrodenplatten andererseits vorgesehen sind, die einander abwechselnd angeordnet sind, wobei die positiven Elektrodenplatten an einen gemeinsamen ersten Pol und die negativen Elektrodenplatten an einen gemeinsamen zweiten Pol jeweils elektrisch angeschlossen sind, wobei die Pole jeweils durch eine jeweilige von einem Deckel des Gehäuses bereitgestellte Öffnung hindurchgeführt und von außen für eine elektrische Kontaktierung zugänglich sind.

Des Weiteren betrifft die Erfindung ein System bestehend aus einer Stapelhilfe und einer Mehrzahl von in der Stapelhilfe angeordneten AGM-Batterien.

AGM-Batterien im Allgemeinen sowie Systeme bestehend aus einer Stapelhilfe einerseits und einer Mehrzahl von AGM-Batterien andererseits im Speziellen sind aus dem Stand der Technik an sich bekannt, weshalb es eines gesonderten druckschriftlichen Nachweises an dieser Stelle nicht bedarf. Es sei deshalb auch nur beispielhaft auf die DE 20 2019 105 570 U1 verwiesen, die einen Batterieschrank zur Aufnahme insbesondere von AGM-Batterien offenbart.

Bei AGM-Batterien handelt es sich um wiederaufladbare Batterien, die über in einem Gehäuse angeordnete Elektrodenplatten verfügen. Das Gehäuse ist im Querschnitt rechteckförmig ausgebildet und verfügt über parallel zueinander verlaufende erste Seitenwände einerseits sowie über parallel zueinander verlaufende zweite Seitenwände andererseits. Dabei sind die vom Gehäuse aufgenommenen Elektrodenplatten zu den ersten Seitenwänden des Gehäuses parallel verlaufend ausgerichtet. Die zweiten Seitenwände des Gehäuses verlaufen quer zu den Elektrodenplatten.

Zwischen zwei benachbarten Elektrodenplatten ist jeweils ein als Separator dienendes Vlies angeordnet. Des Weiteren nimmt das Gehäuse einen die Elektrodenplatten umgebenden Elektrolyten auf, wobei dieser im Falle von AGM-Batterien in gebundener Form vorliegt und von den zwischen den Elektrodenplatten befindlichen Vliesen bereitgestellt ist. Die Vliese dienen mithin nicht nur als Separatoren, sondern auch einer Elektrolytbindung.

Der bei AGM-Batterien in gebundener Form vorliegende Elektrolyt macht es in vorteilhafter Weise möglich, AGM-Batterien auch liegend, d. h. auf einer der Seitenwände des Gehäuses lagern zu können, ohne dass die Gefahr eines Elektrolytaustritts aus dem Gehäuse besteht.

Für eine langlebige Verwendbarkeit von AGM-Batterien ist es erforderlich, dass stets ein Flächenkontakt zwischen den einzelnen Elektrodenplatten und den dazwischen angeordneten und mit Elektrolyt bestückten Vliesen gegeben ist. Um dies sicherzustellen, werden Plattenpakete, bestehend aus den Elektrodenplatten und den dazwischen angeordneten Vliesen, in zusammengepresstem Zustand in das Gehäuse der AGM-Batterie eingesetzt. Im bestimmungsgemäßen Verwendungsfall kann es jedoch aufgrund des sich im Gehäuse ausbildenden Innendrucks zu einem Ausbeulen bzw. Ausbauchung des Gehäuses kommen, was dann trotz zuvor zusammengepresster Plattenpakete dazu führt, dass die zusammengepresste Anordnung der Elektrodenplatten und Vliese nicht weiter aufrechterhalten werden kann. Dies mit dem negativen Effekt, dass der Kontakt zwischen den Elektrodenplatten und den Vliesen nachlässt, wodurch sich eine deutliche Verminderung der Lebenszeit der AGM-Batterie ergibt. Dabei kann der Druck innerhalb eines Gehäuses einer AGM-Batterie insbesondere während eines Ladezykluses steigen, womit es wiederholt zu einer die Lebenszeit reduzierenden Kontaktminderung zwischen Elektrodenplatten und Vliesen kommt. Der Belastungszustand durch die zusammengepressten Vliese ist mithin die Hauptursache für das Ausbauchen der Gehäuse.

Um diesem Problem zu begegnen, ist es bereits vorgeschlagen worden, AGM-Batterien in Regalen liegend zu lagern, wobei die AGM-Batterien in Relation zum Regal derart ausgerichtet sind, dass die Elektrodenplatten parallel zu den Regalböden verlaufend ausgerichtet sind. Dabei sind die AGM-Batterien im bestimmungsgemäßen Verwendungsfall zwischen zwei Regalböden quasi eingeklemmt, wie dies auch mit der schon eingangs genannten DE 20 2019 105 570 U1 vorgeschlagen wird, um einem ungewollten Ausbeulen von Batteriegehäusen entgegenzuwirken.

Vergleichbare Systeme sind ferner aus der US 6,641,951 B1 und der EP 0 922 308 B1 bekannt. Auch hier kommen zur Aufnahme von AGM-Batterien Stapelhilfen zum Einsatz, die davon aufgenommene AGM-Batterien einhausen, wobei Tragelemente in Form von Zwischen- und/oder Einlegeböden vorgesehen sind, die kraftübertragend mit seitlich angeordneten Wangen verbunden sind. Im bestimmungsgemäßen Verwendungsfall sind die AGM-Batterien mithin zumindest zwischen einem Bodenelement und einem Zwischen- und/oder Einlegeboden einerseits und einem Zwischen- und/oder Einlegeboden und einem Deckelelement andererseits eingespannt, womit das Bodenelement, das Deckelelement und der zumindest eine Zwischen- und/oder Einlegeboden einem ungewollten Ausbeulen des Gehäuses einer AGM-Batterie entgegenwirken. Dabei erfolgt im Falle einer Kraftbeaufschlagung des Bodenelements, des Zwischen- und/oder Einlegebodens und/oder des Deckelelements in Folge eines Entgegenwirkens auf eine Gehäuseausbeulung einer AGM-Batterie eine Kraftableitung über die seitlichen Wangen der Stapelhilfe, die kraftübertragend mit dem zumindest einen Zwischen- und/oder Einlegeboden in Wirkverbindung stehen.

Aus der US 20020192543 A1 ist ein Batteriesystem mit einem vertikal aufrechtstehenden Stützrahmen bekannt. Der Stützrahmen dient der Aufnahme von Bleisäurezellen. Hierzu stellt der Stützrahmen mehrere nutenartige Aussparungen bereit. Die nutenartigen Aussparungen ermöglichen die Aufnahme von Einlegeböden und Zellenhalteelementen. Die Bleisäurezellen werden auf den Einlegeböden und/oder den Zellenhalteelementen angeordnet. Das von den Bleisäurezellen eingebrachte Eigengewicht wird von dem Stützrahmen aufgenommen.

Eine weitere Stapelhilfe ist aus der US 6,162,559 A bekannt. Diese vorbekannte Stapelhilfe verfügt über ein Gehäuse, welches einzelne Batteriezellen in Höhenrichtung übereinandergestapelt aufnimmt. Dabei verfügt das Gehäuse über eine Basis, eine obere Wand sowie über Seitenwände. Für eine Druckbeaufschlagung der einzelnen Batteriezellen ist ein Kompressionselement in Ausgestaltung einer Kompressionsplatte vorgesehen. Diese Kompressionsplatte liegt auf den zu Oberst angeordneten Batteriezellen auf und sorgt für eine Druckbeaufschlagung des gesamten Batteriezellen-Stapels. Zur Kraftbeaufschlagung der Kompressionsplatte sind Kompressionsmittel in Form von Schrauben vorgesehen, die sich an der oberen Gehäusewand abstützen, womit eine Kraftableitung über die mit der oberen Gehäusewand in Wirkverbindung stehenden Seitenwände erfolgt.

Die schon vorgenannte EP 0 922 308 B1 schlägt darüber hinaus einen modularen Aufbau der Stapelhilfe vor, wobei einzelne Module vorgesehen sind, die der jeweiligen Aufnahme von AGM-Batterien dienen. Dabei sind die einzelnen Module kraftübertragend miteinander gekoppelt, wobei zudem auf benachbarte Module einwirkende Druckelemente vorgesehen sind.

Ein ebenfalls modularer Aufbau einer Stapelhilfe ist aus der EP 3 396 733 A1 bekannt. Auch gemäß dieser Konstruktion kommen Druckelemente zum Einsatz, die zwischen in Höhenrichtung übereinander angeordneten Modulen positioniert sind. Dabei ist es der besondere Vorteil der mit der EP 3 396 733 A1 vorgeschlagenen Konstruktion, dass es aufgrund der Modularität ermöglicht ist, eine an die Anforderungen des jeweiligen Einzelfalls auszurichtende Anpassungen vorzunehmen.

Obgleich sich die vorbekannten Systeme und Stapelhilfen im alltäglichen Praxiseinsatz bewährt haben, besteht Verbesserungsbedarf. So haftet den modularen Systemen der immanente Nachteil an, dass eine Vielzahl von unterschiedlichen Baukomponenten und Einzelteilen vorgesehen sind, was sowohl die Herstellung verteuert als auch eine Handhabung insbesondere bei einer Montage erschwert. Darüber hinaus weisen alle vorbekannten Systeme und Stapelhilfe den Nachteil auf, dass sie mittels eines entsprechenden Materialeinsatzes sehr robust ausgebildet sind, insbesondere um zu gewährleisten, dass eine entsprechende Kraftableitung über die seitlichen Wangen erfolgen kann. Der insoweit konstruktionsbedingte hohe Materialeinsatz macht die vorbekannten Stapelhilfen vergleichsweise teuer in der Herstellung. Zudem sind durch die materialintensive Ausgestaltung der Stapelhilfen sowohl die Fertigung als auch die Montage am Aufstellungsort erschwert.

Des Weiteren ist es angestrebt, AGM-Batterien bereitzustellen, die insbesondere mit einer Stapelhilfe der vorgenannten Art in einfacher Weise verwendbar sind und eine möglichst einfache Wartung ermöglichen.

Es ist deshalb ausgehend vom vorbeschriebenen Stand der Technik die der Erfindung zugrundeliegende **Aufgabe,** eine Batterie, insbesondere eine AGM-Batterie bereitzustellen, die konstruktionsbedingt eine vereinfachte Handhabung in Kombination mit einer Stapelhilfe zur Aufnahme von AGM-Batterien ermöglicht. Ferner soll eine Stapelhilfe bereitgestellt werden, die bei gleichzeitig verbesserter Betriebswirtschaftlichkeit eine vereinfachte Handhabung insbesondere bei einer Montage ermöglicht und in Kombination mit AGM-Batterien als System verwendbar ist.

Zur **Lösung** dieser Aufgabe wird batterieseitig mit der Erfindung eine Batterie, insbesondere eine AGM-Batterie, vorgeschlagen, die sich dadurch auszeichnet, dass ein jeder Pol jeweils zwei elektrisch voneinander getrennte Kontaktstellen für eine jeweilige elektrische Kontaktierung aufweist, wobei je Pol eine Kontaktstelle vorgesehen ist, die für den elektrischen Anschluss einer Messeinrichtung eingerichtet ist.

Aus dem Stand der Technik sind hingegen Batterien mit einem Batteriegehäuse und einem das Batteriegehäuse oberseitig angeordneten Abdeckelement bekannt, welches üblicherweise mehrere Öffnungen zur Anordnung eines Pols mit jeweils einer Kontaktstelle bereitstellt.

So ist aus der CN 103000830 A ein Batteriegehäuse bekannt, welches oberseitig mehrere Öffnungen aufweist, wobei je Öffnung jeweils ein positiver Pol, ein negativer Pol, eine Anbindungsmöglichkeit zur Spannungsüberwachung, eine Anbindungsmöglichkeit für einen Temperatursensor oder ein eine Säureexplosion vermeidendender Verschlussstopfen bereitgestellt werden kann.

Aus der CN 103682228 A ist weiterhin ein Abdeckelement für eine Batterie bekannt. Das Abdeckelement weist eine mittig des Abdeckelements angeordnete Vertiefung zur Aufnahme eines Batteriemanagementmoduls auf. Das Abdeckelement weist zudem zwei Öffnungen auf, die jeweils einen Pol bereitstellen. Die Pole sind von im Querschnitt kreisrunden Klemmplatten umschlossen, welche die Anbindung von Sensoren ermöglichen. Das Batteriemanagementmodul ist zudem jeweils über eine Nut mit den Polen verbunden, wodurch das Abdeckelement eine vereinfachte Anbindung des Batteriemanagementmoduls mit den Polen ermöglichen soll.

Ferner ist aus der DE 10 2008 029 428 A1 ein Batteriedeckel zur oberseitigen Abdeckung einer Batterie bekannt. Der Batteriedeckel weist zwei Öffnungen zur Durchführung jeweils eines elektrischen Pols mit jeweils einer Kontaktstelle auf. Der Batteriedeckel ist derart ausgebildet, um die Pole vor Feuchtigkeit und mechanischer Beschädigung zu schützen.

Des Weiteren wird zur systemseitigen **Lösung** der vorstehenden Aufgabe vorgeschlagen, ein System, bestehend aus einer Stapelhilfe und einer Mehrzahl von in der Stapelhilfe angeordneten AGM-Batterien der erfindungsgemäßen Art, wobei das Gehäuse einer AGM-Batterie erste Seitenwände aufweist, wobei die ersten Seitenwände und die Elektrodenplatten der AGM-Batterie parallelverlaufend ausgerichtet sind, wobei die Stapelhilfe einen U-förmig ausgebildeten Grundkörper aufweist, der über ausschließlich ein Tragelement zur Aufnahme der AGM-Batterien und über zwei orthogonal zum Tragelement ausgerichtete Wangen verfügt, wobei die Wangen einendseitig sowie anderendseitig des Tragelements am Tragelement angeordnet sind, wobei das Tragelement eine Mehrzahl von in Reihen übereinander angeordnete AGM-Batterien aufnimmt, wobei sowohl das Tragelement als auch die ersten Seitenwände der Gehäuse der AGM-Batterien horizontal verlaufend ausgerichtet sind, wobei die Wangen dazu eingerichtet sind, ausschließlich als seitlicher Schutz für die vom Tragelement aufgenommenen AGM-Batterien zu dienen.

Die erfindungsgemäß ausgestaltete Batterie erlaubt in vorteilhafter Weise eine frontseitige Zugänglichkeit bei liegender Anordnung. Damit eignet sich die erfindungsgemäße Batterie insbesondere in Verwendung mit einer Stapelhilfe zur Bildung eines erfindungsgemäßen Systems.

Die Pole der erfindungsgemäßen Batterie verfügen über zwei Kontaktstellen für eine jeweilige elektrische Kontaktierung. Die Pole der Batterie sind mithin als Doppelpole ausgebildet, so dass je Pol zwei Kontaktstellen bereitstehen. Dabei sind die Kontaktstellen anschlussseitig elektrisch voneinander getrennt. Die Kontaktstellen eines Pols sind mithin beide an die jeweiligen Elektrodenplatten des Pols gemeinschaftlich elektrisch angeschlossen, abgriff-, d.h. anschlussseitig aber elektrisch voneinander getrennt, so dass eine voneinander unabhängige elektrische Kontaktierung der Kontaktstellen eines Pols stattfinden kann.

Je Pol ist erfindungsgemäß eine Kontaktstelle als Messkontaktstelle vorgesehen, das heißt die diesbezügliche Kontaktstelle ist für den elektrischen Anschluss einer Messeinrichtung ausgerüstet bzw. eingerichtet.

Die erfindungsgemäße Ausgestaltung gestattet es, mehrere beispielsweise in einer Stapelhilfe miteinander kombinierte AGM-Batterien in an sich bekannter Weise elektrisch miteinander zu koppeln. Hierzu dienen jeweils die diesbezüglichen Kontaktstellen der Pole. Da die Pole erfindungsgemäß über eine weitere Kontaktstelle verfügen, die jeweils als Messkontaktstellen ausgebildet sind, können die AGM-Batterien wahlweise an eine Messeinrichtung angeschlossen werden. Die bestehende elektrische Verbindung der AGM-Batterien untereinander kann dabei unverändert bestehen bleiben. Es ist auch nicht erforderlich, die zur elektrischen Kontaktierung der AGM-Batterien untereinander vorgesehene Kontaktstelle auch für die elektrische Kontaktierung mit einer Messeinrichtung zu nutzen. Hierzu dient vielmehr allein die erfindungsgemäß vorgesehene zweite Kontaktstelle je Pol.

Insbesondere bei einer bestimmungsgemäß liegenden Anordnung der AGM-Batterien beispielsweise in einer erfindungsgemäßen Stapelhilfe ist aufgrund der konstruktiven Ausgestaltung der erfindungsgemäßen Batterie in einfacher Weise eine Zugänglichkeit derselben verwenderseitig möglich. Dabei könne sowohl elektrische Kontaktierungen der AGM-Batterien untereinander eingerichtet, geprüft und/oder gewartet werden, als auch im Bedarfsfall Messungen durchgeführt werden, beispielsweise Spannungsmessungen, Strommessungen und/oder Impedanzmessungen. Die hierfür vorgesehenen Messkontaktstellen sind verwenderseitig frei zugänglich und im Besonderen für die elektrische Kontaktierung einer Messeinrichtung ausgerüstet, so dass eine Messeinrichtung verwenderseitig in einfacher Weise in eine elektrische Verbindung mit der jeweiligen AGM-Batterie gebracht werden kann. Da es hierfür nicht erforderlich ist, auch die andere Kontaktstelle je Pol einer AGM-Batterie zu verwenden, kann diese dauerhaft geschützt unter beispielsweise einer entsprechenden Polkappe angeordnet sein.

Die erfindungsgemäße Ausgestaltung ermöglicht es, eine oder mehrere Messeinrichtungen dauerhaft mit den entsprechenden Kontaktstellen der AGM-Batterien zu verbinden. Ferner ist es gemäß einer alternativen Verwendung möglich, Einzelmessungen durchzuführen, zu welchem Zweck die entsprechenden Messkontaktstellen der Pole der AGM-Batterien nur für die Zeitdauer einer bestimmungsgemäßen Messung mit der Messeinrichtung kontaktiert sind. In beiden Fällen ist aber eine freie Zugänglichkeit gewährleistet und es steht eine für die Durchführung von Messungen separat ausgebildete Messkontaktstelle zur Verfügung, so dass es eines Anschlusses einer Messeinrichtung an die zur elektrischen Kontaktierung der AGM-Batterien untereinander vorgesehene Kontaktstelle nicht bedarf.

Gemäß einem weiteren Merkmal der Erfindung ist vorgesehen, dass die Messkontaktstelle mittels einer lösbar am Deckel angeordneten Schutzeinrichtung abgedeckt ist.

Mittels der erfindungsgemäß vorgesehenen Schutzrechteinrichtung ist die Messkontaktstelle vor äußeren Einflüssen geschützt, sei es vor mechanischen Krafteinwirkungen und/oder Verunreinigungen. Die Funktionstüchtigkeit der Messkontaktstelle im bestimmungsgemäßen Verwendungsfall ist damit sichergestellt. Dabei ist die Schutzeinrichtung lösbar am Gehäusedeckel der AGM-Batterie angeordnet, so dass sie im Bedarfsfall entfernt und nach Abschluss einer Messung zum Schutz der Kontaktstelle auch wieder montiert werden kann.

Gemäß einem weiteren Merkmal der Erfindung ist vorgesehen, dass die Schutzeinrichtung ein Deckel ist. Im montierten Zustand ist mittels des Deckels die zugehörige Messkontaktstelle abgedeckt und somit vor einem äußeren Eingriff geschützt. Dabei ermöglicht ein Deckel eine besonders einfache Handhabung, wobei auch eine werkzeuglose Montage bzw. Demontage ermöglicht ist.

Gemäß einem weiteren Merkmal der Erfindung ist vorgesehen, dass die Kontaktstellen beabstandet voneinander in eine außenseitig des Deckels ausgebildete Poleinfassung eingebettet sind.

Die Kontaktstellen eines Pols sind beabstandet zueinander angeordnet. Sie sind in eine Poleinfassung eingebettet, die außenseitig des Deckels des Batteriegehäuses angeordnet ist. Diese Poleinfassung kann beispielsweise aus Kunststoff gebildet sein. Sie sorgt für eine positionsgenaue und dauerhaft sichere Ausrichtung der Kontaktstellen in Relation zum Gehäusedeckel, was eine gute Zugänglichkeit und einfache Handhabung ermöglicht. Ferner sind die beiden Kontaktstellen durch die Poleinfassung elektrisch voneinander isoliert, so dass ungewollte elektrische Brücken zwischen den Kontaktstellen vermieden sind.

Gemäß einem weiteren Merkmal der Erfindung ist vorgesehen, dass die Poleinfassung einen Aufnahmebereich zur lösbaren Anordnung der Schutzeinrichtung an der Poleinfassung aufweist. Zur Anordnung der Schutzeinrichtung beispielsweise in der Ausgestaltung eines Deckels verfügt die Poleinfassung über einen korrespondierend hierzu ausgebildeten Aufnahmebereich. In diesen ist die Schutzeinrichtung im bestimmungsgemäß montierten Zustand eingesetzt. Es ist so ein sicherer Halt der Schutzeinrichtung an der Poleinfassung gewährleistet, und dies bei gleichzeitiger Möglichkeit der insbesondere werkzeuglosen Demontage.

Gemäß einem weiteren Merkmal der Erfindung ist vorgesehen, dass die Schutzeinrichtung und die Poleinfassung oberflächenbündig abschließen. Es ist so in vorteilhafter Weise gewährleistet, dass keine die Handhabung störenden Vorsprünge oder Rücksprünge ausgebildet sind. Auch das verwenderseitige Verletzungsrisiko bei der Ausbildung elektrischer Anschlüsse ist so minimiert.

Gemäß einem weiteren Merkmal der Erfindung ist vorgesehen, dass die Schutzeinrichtung eine Codierung aufweist, die mit einer korrespondierend hierzu ausgebildeten Gegenkontur der Poleinfassung zusammenwirkt. Hierdurch ist sichergestellt, dass die Schutzeinrichtung stets bestimmungsgemäß montiert wird. Zudem ist ein Vertauschen der je Batterie vorgesehenen beiden Schutzeinrichtungen für die jeweils beiden Messkontaktstellen vermieden.

Die Besonderheit sowohl des erfindungsgemäßen Systems als auch der hierzu gehörenden Stapelhilfe ist in dem einfachen und wenig material- und bauteilintensiven Aufbau zu sehen. Dies vereinfacht sowohl die Fertigung als auch die Montage und vergünstigt zudem die Herstellung. Im Ergebnis wird so bei einer gleichzeitig verbesserten Betriebswirtschaftlichkeit eine vereinfachte Handhabung ermöglicht.

Dabei ist insbesondere die Kombination der Stapelhilfe mit erfindungsgemäßen AGM-Batterien zur Ausbildung des erfindungsgemäßen Systems von Vorteil. Denn mittels der Stapelhilfe werden die AGM-Batterien liegend aufgenommen, so dass die Deckel der einzelnen AGM-Batterien frontseitig der Stapelhilfe verwenderseitig zugänglich sind. Um eine noch weitere Vereinfachung in der Handhabung zu ermöglichen, sind die AGM-Batterien in der schon vorbeschriebenen Weise erfindungsgemäß ausgebildet, so dass frontseitig nicht nur die Kontaktstellen zur elektrischen Verbindung der einzelnen AGM-Batterien zugänglich sind, sondern auch die Messkontaktstellen, so dass entweder dauerhaft oder im Bedarfsfall ein Anschluss einzelner AGM-Batterien an Messeinrichtungen beispielsweise zur Strom-, Spannungs- und/oder Impedanzmessung möglich ist. Dabei sind die Kontaktstellen zur Messung mittels einer Schutzeinrichtung, insbesondere eines Deckels, im Nichtgebrauchsfall abgedeckt, so dass diese vor ungewollten mechanischen Kraftbeaufschlagungen und/oder Verunreinigungen geschützt sind.

Die Stapelhilfe nach der Erfindung nimmt im bestimmungsgemäßen Verwendungsfall eine Mehrzahl von AGM-Batterien auf, die in Reihen übereinander angeordnet sind. Dabei sind die AGM-Batterien allein durch ein Tragelement abgestützt, das in Höhenrichtung zuunterst angeordnet ist, das also die in Reihen übereinander angeordneten AGM-Batterien aufnimmt. Im Unterschied zum Stand der Technik sind mithin keine Zwischen- oder Einlegeböden, Kompressionselemente und/oder dergleichen vorgesehen, die sich kraftübertragend an den Wangen abstützen. Erfindungsgemäß ist vielmehr ausschließlich nur ein Tragelement vorgesehen, das der Aufnahme der AGM-Batterien dient. Die Stapelhilfe ist mithin frei von weiteren an den Wangen angeordneten und AGM-Batterien aufnehmenden Tragelementen ausgebildet. Seitlich des Tragelements sind im bestimmungsgemäßen Zustand vertikal ausgerichtete Wangen vorgesehen, die am Tragelement angeordnet sind und die einerseits dazu dienen, dass für die aufeinander aufgestapelten AGM-Batterien ein Herausfallschutz geschaffen ist und die andererseits sicherstellen, dass die im bestimmungsgemäßen Verwendungsfall aufgestapelten AGM-Batterien vor einem ungewollten mechanischen Einfluss von außen geschützt sind. Im Unterschied zum Stand der Technik sind keine weiteren Tragelemente beispielsweise in Form von Zwischen- oder Einlegeböden vorgesehen, die der Aufnahme von AGM-Batterien dienen und kraftübertragend an den Wangen angeordnet sind. Insofern übernehmen die Wangen der erfindungsgemäßen Stapelhilfe keine tragende Funktion, sondern dienen im vorerläuterten Sinne nur als seitlicher Schutz für die von der Stapelhilfe aufgenommenen AGM-Batterien.

Diese erfindungsgemäße Ausgestaltung erbringt in synergetischer Weise im Besonderen zwei Vorteile. Zum einen ist es ermöglicht, die seitlichen Wangen im Unterschied zum Stand der Technik weniger stabil und damit auch weniger materialintensiv ausführen zu können. Dies deshalb, weil die Wange nach der erfindungsgemäßen Ausgestaltung keinerlei Tragfunktion, sondern nur eine seitliche Schutzfunktion übernehmen. Dies führt im Ergebnis zu einer vereinfachten Montage und kostengünstigeren Herstellung. Zum anderen ist darüber hinaus von Vorteil, dass die erfindungsgemäße Ausgestaltung insgesamt über einen nur denkbar einfachen Aufbau verfügt und schlussendlich über nur drei Baukomponenten verfügt, nämlich über zwei Wangen und ein dazwischen angeordnetes Tragelement. Damit ist eine gegenüber dem Stand der Technik deutlich verringerte Anzahl an Baukomponenten erreicht, was gleichfalls die Herstellungskosten senkt und eine Montage vereinfacht.

Die erfindungsgemäße Ausgestaltung macht sich die Erkenntnis zu Nutze, dass die im bestimmungsgemäßen Verwendungsfall von der Stapelhilfe aufgenommenen AGM-Batterien aufgrund ihres Eigengewichts dafür Sorge tragen, dass ein ungewolltes Ausbeulen einzelner Batterie-Gehäuse sicher unterbunden ist. Systemseitig ist mit der Erfindung deshalb auch vorgesehen, dass sowohl das Tragelement als auch die ersten Seitenwände der Gehäuse der AGM-Batterien horizontal verlaufend ausgerichtet sind, wobei die ersten Seitenwände und die Elektrodenplatten parallel zueinander verlaufen. Im bestimmungsgemäßen Verwendungsfall sind mithin die AGM-Batterien in Ausbeulrichtung übereinander angeordnet, wobei eine mögliche Ausbeulung dadurch verhindert ist, dass sich die in Reihen übereinander aufgestapelten AGM-Batterien schwerkraftbedingt gegenübereinander abstützen. Dabei dient das die AGM-Batterien aufnehmende Tragelement als Widerlager, auf dem die AGM-Batterien aufliegen. Da erfindungsgemäß keine Zwischen- und/oder Einlegeböden, d. h. keine weiteren Tragelemente vorgesehen sind, erfolgt auch keine Krafteinleitung in die seitlich ausgebildeten Wangen, auch nicht über Kompressionselemente, sodass diesen im Unterschied zum Stand der Technik keine tragende und/oder abstützende Funktion zukommt.

Insofern übernehmen die nach der Erfindung vorgesehenen Wangen einzig und allein eine die aufgestapelten AGM-Batterien schützende Funktion, und zwar vor ungewollten mechanischen Einflüssen von außen einerseits und vor insbesondere im Erschütterungsfall aus der Stapelhilfe zur Seite unter Umständen ansonsten herausfallenden oder kippenden AGM-Batterien andererseits.

Gemäß einem weiteren Merkmal der Erfindung ist vorgesehen, dass das Tragelement auf seiner wangenabgewandten Unterseite mit streifenförmig ausgebildeten und als Standfüße dienenden Isolatoren aus Kunststoff ausgerüstet ist. Das Tragelement bzw. die davon aufgenommenen AGM-Batterien stützen sich mithin schlussendlich unter Zwischenordnung der Isolatoren auf dem Untergrund am Aufstellungsort der Stapelhilfe ab. Dabei sind die Isolatoren aus einem nicht elektrisch leitenden Material gebildet, nämlich Kunststoff.

Die Isolatoren dienen dabei nicht nur der elektrischen Isolation der Stapelhilfe gegenüber dem Untergrund am Aufstellungsort, sie dienen zugleich auch als Standfüße. Eine sichere Aufstellung der Stapelhilfe am Aufstellungsort ist so in vorteilhafter Weise gewährleistet. Dabei bestehen die Isolatoren vorzugsweise aus einem weichelastischen Kunststoffmaterial, so dass ein Niveauausgleich bei einem etwaigen nicht ebenen Untergrund am Aufstellungsort gewährleistet ist.

Aus der Möbelindustrie ist es bekannt, plättchenförmig ausgebildete Füße zu verwenden, die am abzustützenden Möbelstück auch höhenverstellbar angeordnet sein können. Eine solche Höhenverstellung ist insbesondere dann vonnöten, wenn der Untergrund am Aufstellungsort nicht hinreichend nivelliert ausgebildet ist.

Von Nachteil derlei vorbekannter Füße ist indes, dass sie aufgrund der Möglichkeit der Verstellbarkeit nicht größerflächig ausgebildet sind und so eine nur sehr punktuelle Krafteinleitung ermöglichen. Im Unterschied hierzu sind die Isolatoren nach der Erfindung streifenförmig und damit größerflächig ausgebildet, womit eine mehr flächenhafte Kraftableitung erreicht ist. Dies ermöglicht es in vorteilhafter Weise, das Tragelement weniger stabil auszubilden, was wiederum die Herstellung der erfindungsgemäßen Stapelhilfe vergünstigt und auch die Montage vor Ort erleichtert. Zudem kann aufgrund der streifenförmigen Ausgestaltung der Isolatoren die Anzahl der insgesamt einzusetzenden Isolatoren auf ein Minimum reduziert werden. Denn bei nur punktförmig kraftableitenden Isolatoren ist zur Vergrößerung der insgesamt gegebenen Standfläche eine Vielzahl einzelner Isolatoren erforderlich, was dank der erfindungsgemäßen Ausgestaltung ob der Streifenförmigkeit vermieden ist. Auch hierdurch wird eine Montage bzw. Demontage vereinfacht.

Der mit der streifenförmigen Ausgestaltung der Isolatoren einhergehende Nachteil der mangelnden Höhenverstellbarkeit wird bewusst in Kauf genommen, da die vorbeschriebenen Vorteile hinsichtlich Herstellung und Montage überwiegen. Zudem hat sich in der Praxis herausgestellt, dass eine separate Höhenverstellung einzelner Isolatoren nur in wenigen Ausnahmefällen tatsächlich erforderlich ist. Sofern also im Einzelfall eine Ausnevillierung der Stapelhilfe erforderlich sein sollte, so kann diese manuell durch den Einsatz zusätzlicher Unterlegelemente erreicht werden. Bei diesen Unterlegelementen kann es sich beispielsweise um einzelne Streifenelemente aus Kunststoff handeln.

Im Ergebnis erbringt die erfindungsgemäße Ausgestaltung der streifenförmigen Isolatoren eine vereinfachte Handhabung. Es kann herstellerseitig eine Vormontage erfolgen, so dass am Aufstellungsort selbst keine weitere Montage erforderlich ist. Aufgrund ihrer Elastizität vermögen die erfindungsgemäßen Isolatoren einen gewissen Niveauausgleich zu ermöglichen. Dieser ist aber oftmals gar nicht erforderlich, so dass die Vorteile der vereinfachten und vergünstigten Herstellung und der vereinfachten Handhabung vor Ort am Aufstellungsort überwiegen.

Gemäß einem weiteren Merkmal der Erfindung ist vorgesehen, dass das Tragelement zwei im Querschnitt rechteckförmige Rohre aufweist, die parallel verlaufend ausgerichtet in Rohrquerrichtung, d. h. in einer Richtung quer zur Rohrlängsrichtung voneinander beabstandet angeordnet sind. Diese beiden rechteckförmigen Rohre dienen quasi als Tragbalken, auf denen im bestimmungsgemäßen Verwendungsfall aufgestapelte AGM-Batterien ruhen. Der Einsatz derartiger Tragbalken ist im Unterschied zu flächenhaft ausgebildeten Tragelementen Ressourcen schonender, insbesondere weniger materialintensiv. Dabei erweisen sich Rechteckrohre zudem besonders vorteilhaft bei der Aufnahme von im bestimmungsgemäßen Belastungsfall auftretenden Biege- und Torsionsbeanspruchungen. Aufgrund der rechteckförmigen Ausgestaltung ist zudem sichergestellt, dass eine in einfacher Weise vorzunehmende Stapelung der über ein im Querschnitt ebenfalls rechteckförmig ausgebildetes Gehäuse verfügenden AGM-Batterien gewährleistet ist. Die beiden Rohre können in ihrer jeweiligen Querschnittsfläche unterschiedlich groß ausgebildet sein.

Gemäß einem weiteren Merkmal der Erfindung ist vorgesehen, dass zwischen den beiden Rohren ein Abstandshalter angeordnet ist. Dieser Abstandshalter sorgt im bestimmungsgemäßen Verwendungsfall der Stapelhilfe für eine dauerhaft sichere Beabstandung der beiden Rohre, womit eine sichere Aufnahme der AGM-Batterien durch das Tragelement gewährleistet ist. Durch den Abstandshalter ist zudem ein definierter Abstand zwischen den beiden Rohren sichergestellt, was insbesondere mit Blick auf die Montage einer Verlängerung der Stapelhilfe von Vorteil ist, wie dies im Weiteren noch näher beschrieben werden wird. Ein zwischen den beiden Rohren ausgebildeter Abstandshalter dient zudem dazu, eine Wange am Tragelement anzuordnen. Dem Abstandshalter kommt mithin eine Doppelfunktion zu. Zum einen sorgt er für die definierte Abstandswahrung zwischen den beiden Rohren des Tragelements und zum anderen dient er als Ankerelement bzw. Widerlager zur Anordnung einer Wange am Tragelement.

Die erfindungsgemäß vorgesehenen Isolatoren sind auf der wangenabgewandten Unterseite des Trageelements angeordnet und bevorzugterweise mit beiden Rohren des Tragelements gekoppelt. Dabei kann die Verbindung eines Isolators mit den beiden Rohren eine Steck-, Schraub- und/oder Klebverbindung sein.

Ein Tragelement ist bevorzugter Weise mit einer Mehrzahl von Isolatoren ausgerüstet. Es sind wenigstens zwei Isolatoren vorgesehen, die beabstandet voneinander angeordnet sind, beispielsweise einendseitig sowie anderendseitig des Tragelements. Je nach Erstreckung des Tragelements in Längsrichtung können auch mehr als nur zwei Isolatoren vorgesehen sein. Bevorzugt ist es indes, die Isolatoren hinsichtlich ihrer jeweiligen Beabstandung voneinander äquidistant auszurichten.

Gemäß einem weiteren Merkmal der Erfindung ist vorgesehen, dass die Rohre stirnseitig offen ausgebildet sind. Ein jedes Rohr des Tragelements verfügt mithin stirnseitig über Eingangsöffnungen, das heißt einendseitig über eine erste Eingangsöffnung und anderendseitig über eine zweite Eingangsöffnung. Diese Eingangsöffnungen dienen dazu, wie dies im Weiteren noch näher beschrieben werden wird, Verbindungsmittel aufzunehmen, mittels denen die Stapelhilfe im Bedarfsfall in Längsrichtung verlängert werden kann, wobei eine verlängerte Stapelhilfe im Unterschied zu einer unverlängerten Stapelhilfe ein Mehr an AGM-Batterien aufnehmen kann.

Gemäß einem weiteren Merkmal der Erfindung ist vorgesehen, dass das Tragelement aus zwei lösbar miteinander verbundenen Tragelementabschnitten gebildet ist. Ein Tragelement ist mithin zweiteilig ausgebildet und verfügt über einen ersten Tragelementabschnitt einerseits und einen zweiten Trageelementabschnitt andererseits. Diese beiden Tragelementabschnitte sind in Längsrichtung des Tragelements hintereinander angeordnet und lösbar miteinander verbunden.

Diese Ausgestaltung des Tragelements erbringt im Wesentlichen zwei Vorteile. Zum einen ist eine Transport- und Montagevereinfachung gegeben. Denn das zweiteilig ausgebildete Tragelement kann in seine beiden Abschnitte demontiert einfacher zum Aufstellungsort transportiert und dort bestimmungsgemäß aufgebaut werden. Dabei ist die Montage der beiden Tragelementabschnitte denkbar einfach, da diese unter Zuhilfenahme von selbstklemmenden Verbindungsmitteln lediglich durch Stecken zu montieren sind. Da es aufgrund der erfindungsgemäßen Ausgestaltung nur zu einer Druckbelastung des Tragelements kommt, die Wangen hingegen keine Tragfunktion, sondern nur eine Schutzfunktion übernehmen, wirkt auf die die beiden Tragelementabschnitte lösbar miteinander verbindende Steckverbindung keine Kraft in Längsrichtung der Steckverbindung ein. Insofern bedarf es keiner zusätzlichen Absicherung der Steckverbindung.

Von Vorteil der zweiteiligen Ausgestaltung des Tragelements ist ferner, dass die Stapelhilfe in Längsrichtung größenvariabel ist. So können insbesondere auch mehr als nur zwei Tragelementabschnitte miteinander kombiniert werden. In diesem Zusammenhang ist ferner von Vorteil, dass eine Stapelhilfe in einfacher Weise in Längsrichtung verlängert werden kann. Die Rohre eines Tragelements einer bestehenden Stapelhilfe sind stirnseitig zugänglich und verfügen in vorbeschriebener Weise über Eingangsöffnungen. Diese Eingangsöffnungen dienen in der schon vorbeschriebenen Weise dazu, als Steckmittel ausgebildete Verbindungsmittel aufnehmen zu können. Es ist so insgesamt die Möglichkeit gegeben, eine bestehende Stapelhilfe durch stirnseitiges Anfügen weiterer Tragelementabschnitte zu verlängern. Es ist so in einfacher Weise die Möglichkeit geschaffen, die von einem erfindungsgemäßen System bereitgestellte Batterie-Kapazität im Bedarfsfall ausbauen zu können.

Gemäß einem weiteren Merkmal der Erfindung ist in diesem Zusammenhang vorgesehen, dass sich der U-förmig ausgebildete Grundkörper aus zwei L-förmig ausgebildeten Basiskörpern zusammensetzt, wobei ein Basiskörper einen Tragelementabschnitt und eine hiervon einendseitig angeordnete Wange aufweist. Gemäß dieser bevorzugten Ausführungsform wird mit der Erfindung ein Baukastenprinzip vorgeschlagen. Dabei meint "Baukastenprinzip" im Sinne der Erfindung, dass verwenderseitig Basiskörper bereitgestellt sind, die je nach individuellem Bedarf an Batteriekapazität zur Ausbildung einer entsprechend groß ausgebildeten Stapelhilfe lösbar miteinander verbunden sind. In der einfachsten Ausführungsform sind zwei solcher Basiskörper vorgesehen. In diesem Fall werden die Basiskörper jeweils mit ihren wangenentfernten Enden einander zugewandt und über Verbindungsmittel lösbar miteinander gekoppelt. Es entsteht so in schon vorbeschriebener Weise ein U-förmig ausgebildeter Grundkörper, der ein Tragelement aus zwei Tragelementabschnitten aufweist sowie über zwei Wangen verfügt, wobei pro Tragelementabschnitt eine Wange vorgesehen ist.

An einen solch ausgebildeten U-förmigen Grundkörper können nun nach Bedarf sowohl linksseitig als auch rechtsseitig weiterer Basiskörper angeordnet und mit dem U-förmig ausgebildeten Grundkörper lösbar verbunden werden. Die Stapelhilfe kann so nach Bedarf um die Größe eines halben Grundkörpers vergrößert werden. Sofern also ein Bestandsgrundkörper sowohl linksseitig als auch rechtsseitig jeweils um ein Basiselement erweitert wird, kann die so ausgebildete vergrößerte Stapelhilfe die doppelte Menge an AGM-Batterien im Unterschied zu einer einfachen Stapelhilfe aufnehmen.

Gemäß einem weiteren Merkmal der Erfindung ist vorgesehen, dass die Rohre über stirnseitige Öffnungen zugängliche Kanäle zur Aufnahme von Verbindungsmitteln aufweisen. Wie schon vorstehend beschrieben, ist eine lösbare Verbindung nebengeordneter Basiskörper möglich. Zu diesem Zweck kommen vorzugsweise als Steckmittel ausgebildete Verbindungsmittel zum Einsatz. Zur Anordnung dieser Verbindungsmittel am jeweiligen Tragelement bzw. Tragelementabschnitt sind die das Tragelement bzw. die den Tragelementabschnitt bildenden Rohre mit Kanälen ausgerüstet, in denen Verbindungsmittel im endmontierten Zustand entsprechend zu liegen kommen. Dabei sind diese Kanäle über stirnseitige Öffnungen der Rohre zugänglich.

Gemäß einem weiteren Merkmal der Erfindung ist vorgesehen, dass zwei Tragelementabschnitte mittels zweier Verbindungsmittel lösbar miteinander verbunden sind, wobei die Verbindungsmittel im Querschnitt jeweils U-förmig und zu den stirnseitigen Öffnungen der Rohre korrespondierend ausgebildet sind. Die im Querschnitt U-förmige Ausgestaltung der Verbindungsmittel ermöglicht eine einfache Montage bzw. Demontage, und dies in vorteilhafter Weise werkzeuglos. Dabei sind die Verbindungsmittel im Vergleich zu den von den Rohren der Tragelemente bzw. Tragelementabschnitte bereitgestellten Kanälen auf Übermaß ausgebildet. Durch leichtes Zusammendrücken im Montagefall können die Verbindungsmittel in ihrer äußeren geometrischen Form verkleinert und so in die zugehörigen Kanäle der Rohre eingeschoben werden. Dort spreizen sich die Verbindungsmittel wieder auf und legen sich so unter Federvorspannung kraft- und formschlüssig an die Innenwand der Rohre an. Es ist so eine einfach zu montierende bzw. zu demontierende Verbindung gegeben, die gleichwohl aber eine sichere Verbindung gewährleistet und damit auch eine sichere Aufnahme von AGM-Batterien ermöglicht. Dabei ist in diesem Zusammenhang von Bedeutung, dass die Wangen keine Kraftquerbeaufschlagung abfangen müssen, das heißt keine Kraftkomponente quer zur Vertikalen aufnehmen müssen, so dass auch eine Kraftbeaufschlagung der die Rohre miteinander koppelnden Steckverbindungen quer zur Vertikalen unterbleibt. Auch insofern ist eine dauerhaft sichere Verbindungsausgestaltung gewährleistet.

Weitere Merkmale und Vorteile der Erfindung ergeben sich aus der nachfolgenden Beschreibung anhand der Figuren. Dabei zeigen
- Fig. 1: in schematisch perspektivischer Darstellung den Gehäusedeckel einer erfindungsgemäßen Batterie mit demontierten Schutzeinrichtungen;
- Fig. 2: in schematisch perspektivischer Darstellung den Gehäusedeckel nach Fig. 1 mit montierten Schutzeinrichtungen;
- Fig. 3: in schematisch perspektivischer Darstellung eine Stapelhilfe des erfindungsgemäßen Systems;
- Fig. 4: in schematisch perspektivischer Darstellung einen Basiskörper der Stapelhilfe nach Fig. 3;
- Fig. 5: in schematischer Perspektivansicht von oben einen Tragelementabschnitt;
- Fig. 6: in schematisch perspektivischer Ansicht von unten den Tragelementabschnitt nach Fig. 5;
- Fig. 7: in schematisch perspektivischer Darstellung eine erfindungsgemäße Stapelhilfe gemäß einer alternativen Ausführungsform;
- Fig. 8: in einer Detailansicht die Stapelhilfe nach Fig. 7 und
- Fig. 9: in schematisch perspektivischer Darstellung die Stapelhilfe nach Fig. 7 mit davon aufgenommenen AGM-Batterien.

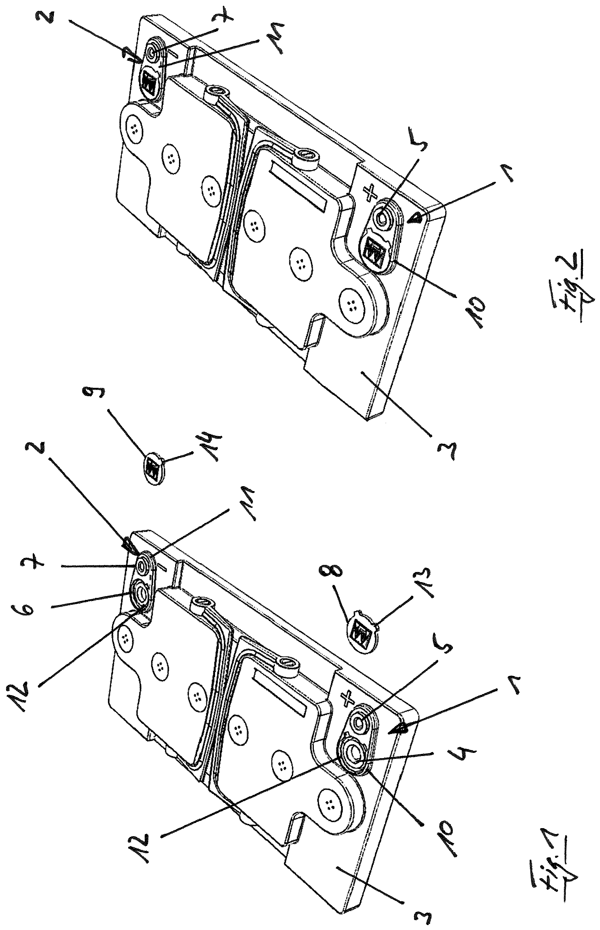

Fig. 1 lässt in schematisch perspektiver Darstellung den Gehäusedeckel einer erfindungsgemäßen Batterie erkennen. Das Batteriegehäuse als solches ist der besseren Übersicht wegen in den Figuren nicht dargestellt.

Eine erfindungsgemäße Batterie insbesondere in der Ausgestaltung als AGM-Batterie verfügt über ein Gehäuse sowie über mehrere Elektrodenplatten. Diese sind innerhalb des Gehäuses angeordnet. Es sind einerseits positive Elektrodenplatten und andererseits negative Elektrodenplatten vorgesehen, die einander abwechselnd innerhalb des Gehäuses angeordnet sind. Dabei sind in an sich bekannter Weise die positiven Elektrodenplatten an einen gemeinsamen ersten Pol 1 und die negativen Elektrodenplatten an einen gemeinsamen zweiten Pol 2 jeweils elektrisch angeschlossen.

Wie die Fign. 1 und 2 in diesem Zusammenhang erkennen lassen, sind die Pole 1 und 2 jeweils durch eine Öffnung in dem das Batteriegehäuse verschließenden Deckel 3 hindurchgeführt und von außen für eine elektrische Kontaktierung zugänglich.

Erfindungsgemäß weist ein jeder Pol 1 bzw. 2 jeweils zwei Kontaktstellen 4 und 5 bzw. 6 und 7 für eine jeweilige elektrische Kontaktierung auf. Dabei ist je Pol 1 bzw. 2 eine als Messkontaktstelle dienende Kontaktstelle 4 bzw. 6 vorgesehen, die für den elektrischen Anschluss einer Messeinrichtung eingerichtet ist.

Die erfindungsgemäß ausgebildeten Pole 1 und 2 stellen mithin jeweils zwei Kontaktstellen 4 und 5 bzw. 6 und 7 bereit, wobei die Kontaktstellen 5 und 7 jeweils der elektrischen Kontaktierung von AGM-Batterien untereinander oder an einen anderen Anschluss dienen und die weiteren Kontaktstellen 4 und 6 dazu eingerichtet sind, eine elektrische Verbindung der jeweiligen AGM-Batterie mit einer Messeinrichtung auszubilden.

Wie die Fign. 1 und 2 weiter erkennen lassen, sind die Kontaktstellen 4 und 5 bzw. 6 und 7 je Pol 1 bzw. 2 beabstandet voneinander in eine außenseitig des Deckels 3 ausgebildete Poleinfassung 10 bzw. 11 eingebettet. Diese Poleinfassungen 10 und 11 sind aus Kunststoff gebildet und sorgen jeweils für eine positionsgenaue und sichere Ausrichtung der jeweiligen Kontaktstellen 4 und 5 bzw. 6 und 7 je Pol 1 bzw. 2.

Für den Schutz der Kontaktstellen 4 und 6 gegenüber äußeren Einflüssen ist je Kontaktstelle 4 bzw. 6 eine Schutzeinrichtung in der Ausgestaltung eines Deckels 8 bzw. 9 vorgesehen. Fig. 1 lässt diese Deckel 8 und 9 in demontierter Stellung erkennen, wohingegen Fig. 2 die bestimmungsgemäße Anordnung der Deckel 8 und 9 an der jeweils zugehörigen Poleinfassung 10 bzw. 11 zeigt.

Zur Anordnung der Deckel 8 und 9 an der jeweils zugehörigen Poleinfassung 10 und 11 verfügen die Poleinfassungen 10 und 11 jeweils über einen Aufnahmeberiech 12. In diese sind die Deckel 8 und 9 im montierten Zustand oberflächenbündig eingesetzt, wie sich dies aus Fig. 2 ergibt. Um eine verdrehfeste und damit lagesicheren Anordnung der Deckel 8 und 9 in der jeweils zugehörigen Poleinfassung 10 bzw. 11 zu ermöglichen, verfügen die Deckel 8 und 9 jeweils über eine Lagecodierung 13 bzw. 14 in der Ausgestaltung eines Fortsatzes, der im bestimmungsgemäßen Verwendungsfall in einer zugehörigen Ausnehmung der jeweiligen Poleinfassung 10 bzw. 11 zu liegen kommt. Die Codierung 13 bzw. 14 stellt zudem sicher, dass ein Vertauschen der Deckel 8 und 9 vermieden ist.

Wie sich aus einer Zusammenschau der Fign. 1 und 2 ergibt, sind bei einer liegenden Anordnung von AGM-Batterien in einer Stapelhilfe die Pole 1 und 2 bzw. die davon bereitgestellten Kontaktstellen 4 und 5 einerseits und die Kontaktstellen 6 und 7 andererseits durch einen Verwender frontseitig in einfacher Weise zugänglich. Es kann so verwenderseitig sowohl eine elektrische Kontaktierung einzelner AGM-Batterien untereinander vorgenommen werden als auch im Bedarfsfall der elektrische Anschluss einer Messeinrichtung an eine AGM-Batterie vorgenommen werden. Dabei dienen zur elektrischen Kontaktierung der AGM-Batterien untereinander die jeweils hierfür vorgesehenen Kontaktstellen 5 und 7, wohingegen die anderen Kontaktstellen 4 und 6 dazu eingerichtet sind, im bestimmungsgemäßen Verwendungsfall in Kombination mit einer Messeinrichtung verwendet zu werden.

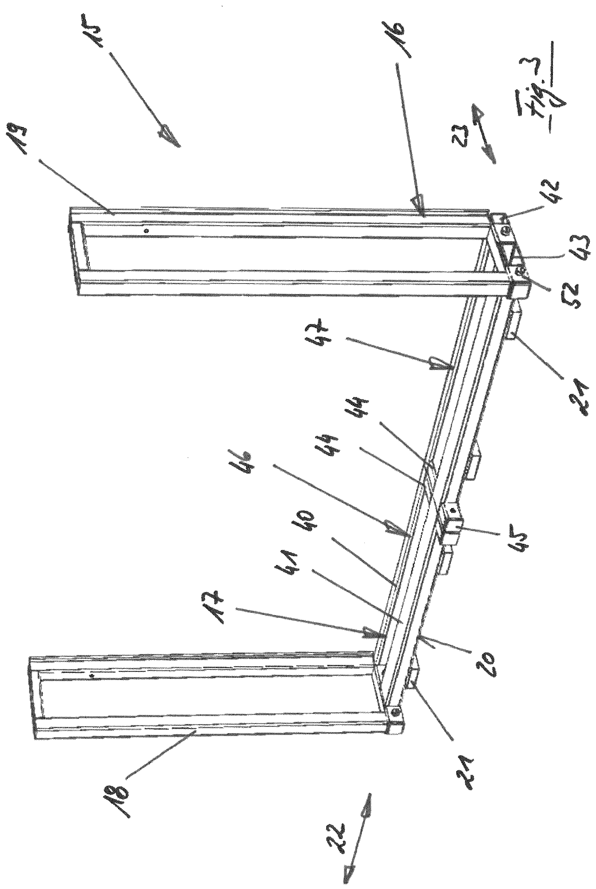

Fig. 3 lässt in schematisch perspektivischer Darstellung eine Stapelhilfe 15 erkennen, die im bestimmungsgemäßen Verwendungsfall der Aufnahme einer Mehrzahl von AGM-Batterien dient, die in den Figuren der besseren Übersicht wegen im Einzelnen nicht dargestellt sind.

Die Stapelhilfe 15 verfügt über einen U-förmig ausgebildeten Grundkörper 16. Dieser weist seinerseits ein Tragelement 17 und zwei Wangen 18 und 19 auf, wobei die Wangen 18 und 19 einendseitig sowie anderendseitig des Tragelements 17 am Tragelement 17 angeordnet sind.

Im bestimmungsgemäßen Verwendungsfall nimmt das Tragelement 17 eine Mehrzahl von in Reihen übereinander angeordneten AGM-Batterien auf. Dabei sind sowohl das Tragelement 17 als auch die ersten Seitenwände der Gehäuse der AGM-Batterien horizontal verlaufend ausgerichtet, so dass die von den Gehäusen der AGM-Batterien jeweils aufgenommenen und zu den ersten Seitenwänden der Gehäuse jeweils parallel verlaufend ausgerichteten Elektrodenplatten der AGM-Batterien ebenfalls parallel zum Tragelement 17 und damit horizontal verlaufend ausgerichtet sind.

Die Wangen 18 und 19 sind dazu eingerichtet, ausschließlich als seitlicher Schutz für vom Tragelement 17 aufgenommene AGM-Batterien zu dienen. Insofern übernehmen die Wangen 18 und 29 der Stapelhilfe 15 keine tragende Funktion, sondern dienen nur als seitlicher Schutz für die von der Stapelhilfe 15 aufgenommenen AGM-Batterien, insbesondere als Schutz vor einem ungewollten mechanischen Einfluss von außen.

Das Tragelement 17 weist im Querschnitt rechteckförmige Rohre 40 und 41 auf. Diese sind parallel zueinander ausgerichtet und in einer Richtung quer zur Rohrlängsrichtung beabstandet voneinander angeordnet. Zur Abstandswahrung ist zwischen den beiden Rohren 40 und 41 ein Abstandshalter 44 angeordnet, wobei im gezeigten Ausführungsbeispiel mehrere Abstandshalter 44 vorgesehen sind.

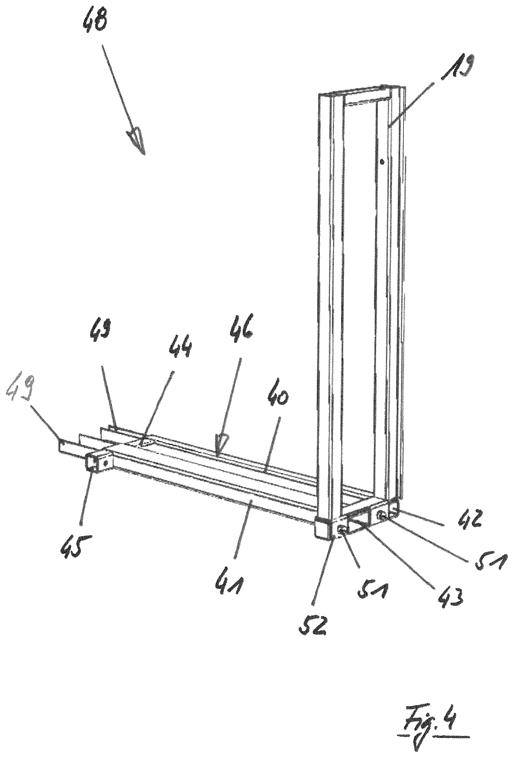

Das Tragelement 17 verfügt über zwei lösbar miteinander verbundene Tragelementabschnitte 46 und 47. Diese sind identisch zueinander ausgebildet und in Längsrichtung 22 des Tragelements 17 hintereinander angeordnet. Dabei ist die Verbindung zwischen den beiden Tragelementabschnitten 46 und 47 lösbar ausgebildet, und zwar durch eine Steckverbindung, wie dies im Weiteren noch anhand von Fig. 4 beschrieben werden wird.

Die Stapelhilfe 15 verfügt des Weiteren über Isolatoren 21. Diese sind streifenförmig ausgebildet und dienen als Standfüße. Sie sind am Tragelement 17 angeordnet, und zwar an dessen wangenabgewandter Unterseite 20. Sie sind aus Kunststoff gebildet, vorzugsweise aus einem weichelastischen Kunststoffmaterial.

Es sind bevorzugterweise eine Mehrzahl von Isolatoren 21 vorgesehen, die in Längsrichtung 22 des Tragelements 17 unter jeweiliger Belassung eines Abstandes hintereinander angeordnet sind. Im gezeigten Ausführungsbeispiel sind je Tragelementabschnitt 46 bzw. 47 zwei Isolatoren 21 vorgesehen, womit das Tragelement 17 insgesamt über vier Isolatoren 21 verfügt.

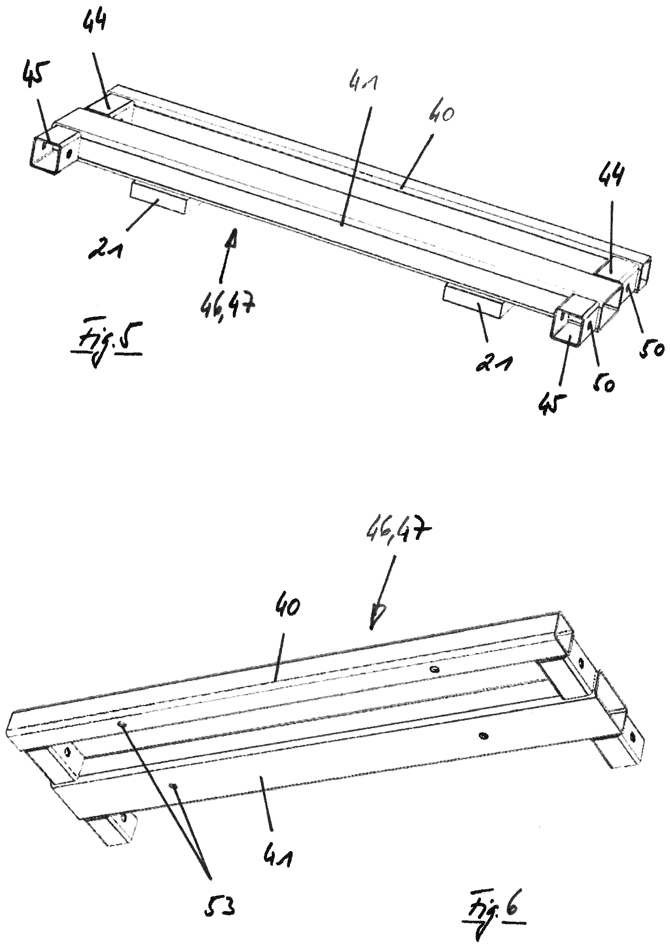

Die Isolatoren 21 erstrecken sich über die gesamte Breite des Tragelements 17 in Breitenrichtung 23. Damit schließen die Isolatoren 21 mit den jeweils zugehörigen Rohren 40 und 41 mit Bezug auf die Zeichnungsebene nach Fig. 3 sowohl vorderseitig als auch rückseitig bündig ab. Dieser Sachzusammenhang ergibt sich insbesondere auch aus der Darstellung nach Fig. 5.

Der in Fig. 3 dargestellte Grundkörper 16 ist aus zwei L-förmig ausgebildeten Basiskörpern 48 zusammengesetzt. Ein solcher Basiskörper 48 ist in Fig. 4 dargestellt.

Wie sich aus der Darstellung nach Fig. 4 ergibt, weist ein Basiskörper 48 einen Trageelementabschnitt 46 bzw. 47 auf sowie eine hieran einendseitig angeordnete Wange 18 bzw. 19. Der U-förmig ausgebildete Grundkörper 16 ist mithin zweiteilig ausgebildet und besteht aus zwei Basiskörpern 48, die im endmontierten Zustand des U-förmig ausgebildeten Grundkörpers 16 lösbar miteinander gekoppelt sind, wie sich dies auch einer Zusammenschau der Fign. 3 und 4 ergibt.

Die Rohre 40 und 41 der Tragelementabschnitte 46 und 47 bzw. des aus den Tragelementabschnitten 46 und 47 gebildeten Tragelements 17 sind stirnseitig offen ausgebildet und stellen jeweils Öffnungen 42 bzw. 43 bereit. Über diese Öffnungen 42 bzw. 43 sind die von den jeweiligen Rohren 40 und 41 jeweils bereitgestellten Kanäle zugänglich. In diese Kanäle ist zwecks lösbarer Verbindung zweier Basiskörper 48 jeweils ein Verbindungsmittel 49 eingeführt, wie sich dies insbesondere aus der Darstellung nach Fig. 4 ergibt. Wie Fig. 4 in diesem Zusammenhang erkennen lässt, sind zwei Verbindungsmittel 49 vorgesehen, die jeweils zur Hälfte vom jeweils zugehörigen Rohr 40 bzw. 41 des Basiskörpers 48 aufgenommen sind. Im endmontierten Zustand greifen die Verbindungsmittel 49 mit ihren nach Fig. 4 noch freien Enden in die Kanäle des benachbarten Basiskörpers 48 ein, das heißt in den mit Bezug auf die Zeichnungsebene nach Fig. 3 linken Basiskörper 48.

Im gezeigten Ausführungsbeispiel sind die Verbindungsmittel 49 im Querschnitt U-förmig ausgebildet. Sie sind zwecks bestimmungsgemäßer Montage an ihren Schenkeln zu ergreifen und zusammenzudrücken und zwar federelastisch. Sie sind mit Bezug auf die von den Rohren 40 und 41 bereitgestellten Kanäle auf Übermaß ausgebildet, so dass sie in leicht zusammengedrücktem Zustand in die jeweiligen Kanäle der Rohre 41 und 42 eingeführt werden können. Sobald sie entspannen und in ihre Ausgangsposition zurückfedern folgt ein federkraftbelastetes Anliegen der Verbindungsmittel 49 an der Innenwand der zugehörigen Rohre 40 bzw. 41. Es ist so eine form- und kraftschlüssige Verbindung gegeben, die die beiden Basiskörper 48 dauerhaft und sicher, gleichwohl aber lösbar miteinander verbindet.

Fig. 5 zeigt in einer schematischen Perspektivansicht ein Tragelementabschnitt 46 bzw. 47. Wie sich aus dieser Darstellung ergibt, sind zwischen den beiden Rohren 40 und 41 einendseitig sowie anderendseitig Abstandshalter 44 angeordnet. Diese sorgen für eine definierte und dauerhaft sichere Beabstandung der beiden Rohre 40 und 41.

Jedem Abstandshalter 44 ist zudem ein Fortsatz 45 zugeordnet, der anderendseitig des mit Bezug auf die Zeichnungsebene nach Fig. 3 vorderen Rohres 41 am vorderen Rohr 41 angeordnet ist. Sowohl die Abstandshalter 44 als auch die Fortsätze 45 verfügen über Bohrungen 50, die im endmontierten Zustand der Aufnahme von Befestigungsmitteln dienen, bei denen es sich insbesondere um Schrauben 51 handelt, wie aus Fig. 4 ersichtlich.

Die Abstandshalter 40 sowie die Fortsätze 45 dienen als Ankerpunkte bzw. Widerlager zur lösbaren Anordnung der Wangen 18 bzw. 19 am jeweils zugehörigen Tragelementabschnitt 46 bzw. 47, wie sich dies insbesondere aus einer Zusammenschau der Fign. 3 und 4 ergibt. Dabei verfügt eine jede Wange 18 bzw. 19 tragelementseitig über zu den Abstandshaltern 44 bzw. den Fortsätzen 45 korrespondierend ausgebildete Schuhe 52. Diese sind gleichfalls mit entsprechenden Bohrungen ausgestattet, so dass im endmontierten Zustand die schuhseitigen Bohrungen einerseits sowie die Bohrungen 50 der Abstandshalter 44 bzw. der Fortsätze 45 von den Schrauben 51 durchgriffen sind. Es ist so eine einfach auszubildende, gleichwohl aber dauerhaft sichere und stabile Anordnung der Wangen 18 und 19 am Tragelement 17 gewährleistet.

Wie die Darstellung nach Fig. 6 erkennen lässt, verfügt ein Tragelementabschnitt 46 bzw. 47 auf seiner wangenabgewandten Unterseite 20 über Bohrungen 53. Diese dienen der positionssicheren Anordnung der schon vorbeschriebenen Isolatoren 21.

Wie wiederum eine Zusammenschau insbesondere nach den Fign. 3 und 4 erkennen lässt, ist die erfindungsgemäße Stapelhilfe 15 nach dem Baukastenprinzip aufgebaut bzw. erweiterbar. So lassen sich zwei identisch ausgebildete Basiskörper 48 gemäß Fig. 4 zu einer Stapelhilfe 15 nach Fig. 3 ausbilden, indem die beiden Basiskörper 48 unter Verwendung der Verbindungsmittel 49 lösbar zu einem U-förmig ausgebildeten Grundkörper 16 miteinander kombiniert werden.

Die so ausgebildete Stapelhilfe 15 gemäß Fig. 3 kann im Bedarfsfall erweitert werden, und zwar in Längsrichtung 22, indem weitere Basiskörper 48 mit Bezug auf die Zeichnungsebene nach Fig. 3 entweder linksseitig und/oder rechtsseitig ergänzt werden. Um dies zu ermöglichen, sind die Rohre 40 und 41 des Tragelements 17 stirnseitig jeweils offen ausgebildet, was in schon vorbeschriebener Weise die Aufnahme von Verbindungsmittel 49 ermöglicht. Ein Basiskörper 48 nach Fig. 4 kann mithin ohne weiteres mit Bezug auf die Zeichnungsebene nach Fig. 3 links- und/oder rechtsseitig der Stapelhilfe 15 angeflanscht werden. Die in Fig. 3 dargestellte Stapelhilfe 15 ist mithin nach Belieben erweiterbar und kann so im Bedarfsfall die gewünschte Anzahl von AGM-Batterien aufnehmen und somit die gewünschte Batteriekapazität zur Verfügung stellen.

Auch ein an eine Stapelhilfe 15 zwecks Erweiterung derselben angeflanschter Basiskörper 48 kann seinerseits wiederum um einen weiteren Basiskörper 48 verlängert werden, indem in gleicher Weise eine lösbare Steckverbindung der schon vorbeschriebenen Art ausgebildet wird.

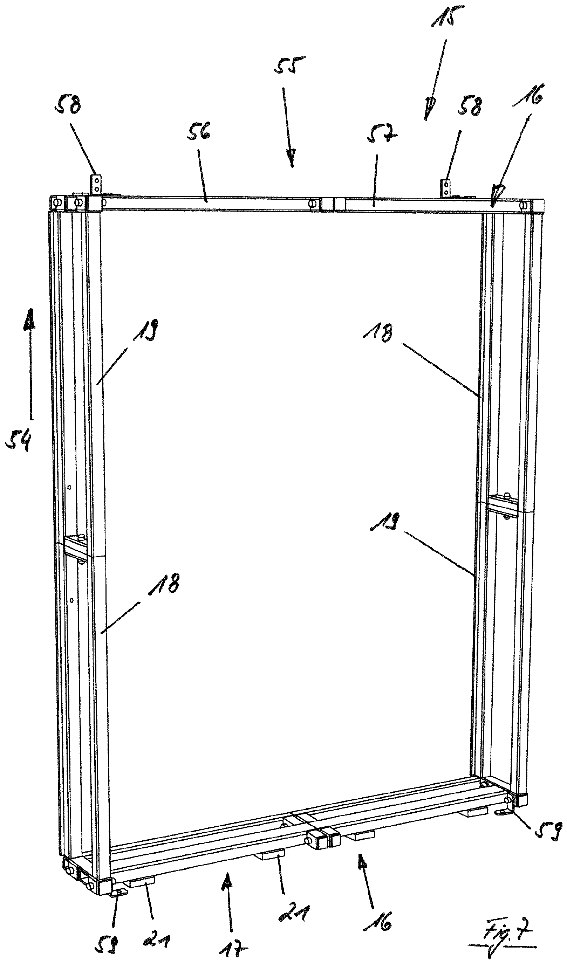

Fig. 7 lässt in einer schematisch perspektivischen Darstellung eine erfindungsgemäße Stapelhilfe 15 gemäß einer alternativen Ausführungsform erkennen.

Die Stapelhilfe 15 nach Fig. 7 ist aus zwei Grundkörpern 16 gebildet, die in Höhenrichtung 54 übereinander angeordnet sind. Dabei sind die offenen Seiten der U-förmigen Grundkörper 16 einander zugewandt, so dass sich eine insgesamt rechteckförmige geschlossene Ausgestaltung ergibt.

Gemäß der alternativen Ausführungsform nach Fig. 7 dient das Tragelement des in Höhenrichtung 54 zuoberst angeordneten Grundkörpers 16 als Dachelement 55. Da die beiden in Höhenrichtung 54 übereinander angeordneten Grundkörper 16 identisch ausgebildet sind, ist auch das als Dachelement 55 dienende Tragelement des oberen Grundkörpers 16 identisch zum Tragelement 17 des unteren Grundkörpers 16 ausgebildet und verfügt über zwei miteinander verbundene Dachelementabschnitte 56 und 57, die identisch zu den Tragelementabschnitten 46 und 47 ausgebildet sind.

Das Dachelement 55 dient im Unterschied zum Tragelement 17 aber nicht der Aufnahme von AGM-Batterien, sondern als Abschlusselement, so dass eine insgesamt geschlossene, mithin rechteckförmig ausgebildete Stapelhilfe 15 gegeben ist.

Das Dachelement 55 dient ferner dazu, im Bedarfsfall eine Wandbefestigung 58 aufnehmen zu können. Für eine solche Wandbefestigung 58 können beispielsweise Winkelelemente vorgesehen sein, die einerseits an der Stapelhilfe 15 und andererseits an einer Wand am Aufstellungsort, beispielsweise einer Gehäusewand angeordnet sind. Die Anbindung solcher Winkelelemente an einem in Höhenrichtung 54 zuoberst angeordneten Dachelement 55 erbringt insbesondere den Vorteil, einer möglichen Umkippbewegung der Stapelhilfe 15 wirkungsvoll entgegenzutreten. Im endmontierten Zustand sind deshalb entsprechende Winkelelemente als Wandbefestigung 58 zur Anbindung des Dachelements 55 an einer Gebäudewand vorgesehen.

Obgleich das Tragelement des in Höhenrichtung 54 zuoberst angeordneten Grundkörpers 16 als Dachelement 55 Verwendung findet und nicht dazu dient, AGM-Batterien aufzunehmen, ist die Verwendung eines zum unteren Tragelement 17 identisch ausgebildeten Dachelements 55 bevorzugt, und zwar aus Gründen der vereinfachten Handhabung, insbesondere hinsichtlich Lagerhaltung und Montage bzw. Demontage. Denn die Stapelhilfe 15 nach Fig. 7 wird in einfacher Weise dadurch ausgebildet, dass zwei Grundkörper 16 gemäß der Ausführungsform nach Fig. 3 in Höhenrichtung 54 übereinander angeordnet werden. Verwenderseitig kann mithin die Aufnahmekapazität einer Stapelhilfe 15 dadurch verdoppelt werden, dass zwei Grundkörper 16 in der Ausgestaltung nach Fig. 3 übereinander angeordnet werden. Für eine lagesichere Fixierung der in Höhenrichtung 54 übereinander angeordneten Grundkörper 16 kommen Steckmittel zum Einsatz, beispielsweise in Form von Rohren oder offenen, U-förmigen Profilen, die jeweils in die die Wangen 18 bzw. 19 bildenden Rohre eingeführt sind. Es kommt insofern eine Steckverbindung zum Einsatz, wie sie vorstehend bereits anhand der Tragelementabschnitte 46 und 47 erläutert ist.

Mit der erfindungsgemäßen Konstruktion der Stapelhilfe 15 wird ein flexibles System bereitgestellt, das verwenderseitig eine Vielzahl möglicher Aufstellungsvarianten gestattet. So kann im einfachsten Fall als Stapelhilfe 15 ein Grundkörper 16 zum Einsatz kommen, wie er in Fig. 3 dargestellt ist. Dieser Grundkörper 16 kann mit Bezug auf die Zeichnungsebene nach Fig. 3 links- und/oder rechtsseitig ergänzt werden, und zwar durch einen Basiskörper 48, wie er in Fig. 4 dargestellt ist. Ferner ist es gestattet, zwei Grundkörper 16 in Höhenrichtung 54 übereinander anzuordnen, welche Ausführungsalternative in Fig. 7 gezeigt ist. Dabei kann auch ein zuoberst angeordneter Grundkörper 16 links- und/oder rechtsseitig durch einen Basiskörper 48 ergänzt werden, vorausgesetzt natürlich, der in Höhenrichtung 54 untere Grundkörper 16 ist durch Basiskörper 48 entsprechend ergänzt. In diesem Fall kommen dann die Grundkörper 16 einerseits sowie die ergänzenden Basiskörper 48 andererseits in Höhenrichtung 54 übereinander zu liegen.

Die Verbindung sowohl der Tragelementabschnitte 46 und 47 als auch der Dachelementabschnitte 56 und 57 erfolgt mittels des schon vorstehend beschriebenen Stecksystems. In gleicher Weise werden übereinander angeordnete Grundkörper 16 bzw.

Basiskörper 48 miteinander verbunden, so dass ein insgesamt einfacher und werkzeugloser Aufbau der Stapelhilfe 15 gewährleistet ist, unabhängig von der gewünschten Aufstellungsvariante.

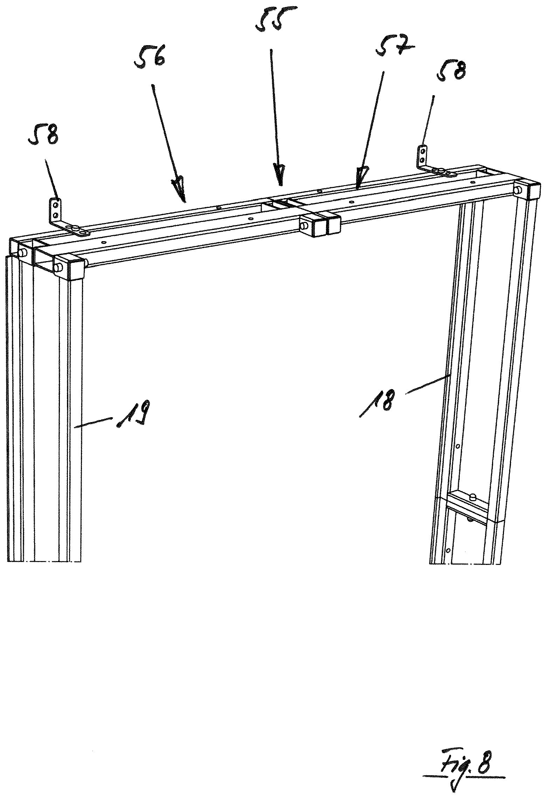

Fig. 8 lässt in einer Detailansicht die als Wandbefestigung 58 dienenden Winkelelemente erkennen, die im gezeigten Ausführungsbeispiel am Dachelement 55 angeordnet sind. Derlei Wandbefestigungen 58 können selbstverständlich auch an den Wangen 18 bzw. 19 sowohl des oberen als auch des unteren Grundkörpers 16 angeordnet sein.

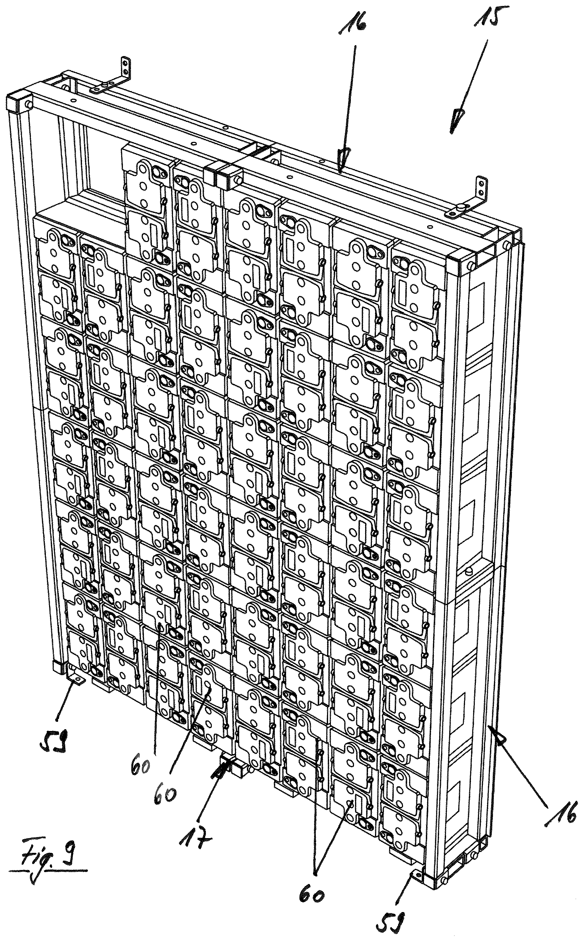

Fig. 9 zeigt schließlich noch eine mit AGM-Batterien 60 bestückte Stapelhilfe 15 nach Fig. 7. Wie dieser Darstellung zu entnehmen ist, sind die AGM-Batterien 60 jeweils so ausgerichtet, dass sie mit ihren ersten Seitenwänden horizontal ausgerichtet sind, so dass die von den AGM-Batterien 60 jeweils bereitgestellten Elektrodenplatten parallel zum Tragelement 17 des unteren Grundkörpers 16 ausgerichtet sind.

Wie eine Zusammenschau der Figuren 7 und 9 des Weiteren ergibt, können gemäß einem weiteren Vorschlag der Erfindung als weitere Option Bodenbefestigungen 59 vorgesehen sein. Auch diese Bodenbefestigungen 59 können winkelförmig ausgebildet sein, wobei es bevorzugt ist, diese an den Wangen 18 bzw. 19 des in Höhenrichtung 54 unteren Grundkörpers 16 der Stapelhilfe 15 einerseits und am Boden am Aufstellungsort andererseits anzuordnen. Eine solche Bodenbefestigung 59 dient insbesondere dazu, einen sicheren Stand der Stapelhilfe 15 auch für den Fall zu gewährleisten, dass von außen größere mechanische Kräfte auf die Stapelhilfe 15 einwirken, beispielsweise für den Fall eines Erdbebens oder eine Kollision eines Fahrzeuges mit der Stapelhilfe 15.

**Bezugszeichen**

| | | | |
|---|---|---|---|
| 1 | Pol | 48 | Basiskörper |
| 2 | Pol | 49 | Verbindungsmittel |
| 3 | Deckel | 50 | Bohrung |
| 4 | Kontaktstelle | 51 | Schraube |
| 5 | Kontaktstelle | 52 | Schuh |
| 6 | Kontaktstelle | 53 | Bohrung |
| 7 | Kontaktstelle | 54 | Höhenrichtung |
| 8 | Deckel | 55 | Dachelement |
| 9 | Deckel | 56 | Dachelementabschnitt |
| 10 | Poleinfassung | 57 | Dachelementabschnitt |
| 11 | Poleinfassung | 58 | Wandbefestigung |
| 12 | Aufnahmebereich | 59 | Bodenbefestigung |
| 13 | Codierung | 60 | AGM-Batterie |
| 14 | Codierung | | |
| 15 | Stapelhilfe | | |
| 16 | Grundkörper | | |
| 17 | Tragelement | | |
| 18 | Wange | | |
| 19 | Wange | | |
| 20 | Unterseite | | |
| 21 | Isolator | | |
| 22 | Längsrichtung | | |
| 23 | Breitenrichtung | | |
| 40 | Rohr | | |
| 41 | Rohr | | |
| 42 | Öffnung | | |
| 43 | Öffnung | | |
| 44 | Abstandshalter | | |
| 45 | Fortsatz | | |
| 46 | Tragelementabschnitt | | |
| 47 | Tragelementabschnitt | | |

## Patentansprüche

1. Batterie, insbesondere AGM-Batterie, mit einem Gehäuse und mehreren im Gehäuse angeordneten Elektrodenplatten, wobei positive Elektrodenplatten einerseits und negative Elektrodenplatten andererseits vorgesehen sind, die einander abwechselnd angeordnet sind, wobei die positiven Elektrodenplatten an einen gemeinsamen ersten Pol (1) und die negativen Elektrodenplatten an einen gemeinsamen zweiten Pol (2) jeweils elektrisch angeschlossen sind, wobei die Pole (1, 2) jeweils durch eine jeweilige von einem Deckel (3) des Gehäuses bereitgestellte Öffnung hindurchgeführt und von außen für eine elektrische Kontaktierung zugänglich sind,
**dadurch gekennzeichnet,**
**dass** ein jeder Pol (1, 2) jeweils zwei elektrisch voneinander getrennte Kontaktstellen (4, 5; 6, 7) für eine jeweilige elektrische Kontaktierung aufweist, wobei je Pol (1, 2) eine Kontaktstelle (4, 6) vorgesehen ist, die für den elektrischen Anschluss einer Messeinrichtung eingerichtet ist.

2. Batterie nach Anspruch 1, **dadurch gekennzeichnet, dass** die Messkontaktstelle (4, 6) mittels einer lösbar am Deckel (3) angeordneten Schutzeinrichtung abgedeckt ist.

3. Batterie nach Anspruch 2, **dadurch gekennzeichnet, dass** die Schutzeinrichtung ein Deckel (8, 9) ist.

4. Batterie nach einem der vorhergehenden Ansprüche, **dadurch gekennzeichnet, dass** die Kontaktstellen (4, 5; 6, 7) beabstandet voneinander in eine außenseitig des Deckels (3) ausgebildete Poleinfassung (10, 11) eingebettet sind.

5. Batterie nach Anspruch 4, **dadurch gekennzeichnet, dass** die Poleinfassung (10, 11) einen Aufnahmebereich (12) zur lösbaren Anordnung der Schutzeinrichtung an der Poleinfassung (10, 11) aufweist.

6. Batterie nach einem der vorhergehenden Ansprüche 4 oder 5, **dadurch gekennzeichnet, dass** die Schutzeinrichtung und die Poleinfassung (10, 11) oberflächenbündig abschließen.

7. Batterie nach einem der vorhergehenden Ansprüche 4 bis 6, **dadurch gekennzeichnet, dass** die Schutzeinrichtung eine Codierung (13, 14) aufweist, die mit einer korrespondierend hierzu ausgebildeten Gegenkontur der Poleinfassung (10, 11) zusammenwirkt.

8. System bestehend aus einer Stapelhilfe (15) und einer Mehrzahl von in der Stapelhilfe (15) angeordneten AGM-Batterien nach einem der vorhergehenden Ansprüche 1 bis 7, wobei das Gehäuse einer AGM-Batterie erste Seitenwände aufweist, wobei die ersten Seitenwände und die Elektrodenplatten der AGM-Batterie parallel verlaufend ausgerichtet sind, wobei die Stapelhilfe (15) einen U-förmig ausgebildeten Grundkörper (16) aufweist, der über ausschließlich ein Tragelement (17) zur Aufnahme der AGM-Batterien und über zwei orthogonal zum Tragelement (17) ausgerichtete Wangen (18, 19) aufweist, wobei die Wangen (18, 19) einendseitig sowie anderendseitig des Tragelements (17) am Tragelement (17) angeordnet sind, wobei das Tragelement (17) eine Mehrzahl von in Reihen übereinander angeordneten AGM-Batterien aufnimmt, wobei sowohl das Tragelement (17) als auch die ersten Seitenwände der Gehäuse der AGM-Batterien horizontal verlaufend ausgerichtet sind, wobei die Wangen (18, 19) dazu eingerichtet sind, ausschließlich als seitlicher Schutz für die vom Tragelement (17) aufgenommenen AGM-Batterien zu dienen.

9. System nach Anspruch 8, **dadurch gekennzeichnet, dass** das Tragelement (17) zwei lösbar miteinander verbundene Tragelementabschnitte (46, 47) aufweist.

10. System nach Anspruch 9, **dadurch gekennzeichnet, dass** sich der U-förmig ausgebildete Grundkörper (16) aus zwei L-förmig ausgebildeten Basiskörpern (48) zusammensetzt, wobei ein Basiskörper (48) einen Tragelementabschnitt (46, 47) und eine hieran einendseitig angeordnete Wange (18, 19) aufweist.
